# EUROPEAN PATENT APPLICATION

(11) **EP 1 298 090 A2**
(43) Date of publication of application: **02.04.2003**
(21) Application number: 02256659.0
(22) Date of filing: 25.09.2002
(51) Int. Cl.: C01B 31/20, C01B 17/76

(54) **Oxygen enrichment of a sulfuric acid plant furnace**

(30) Priority: 26.09.2001 US 325033 P
(71) Applicant: THE BOC GROUP, INC., Murray Hill, New Providence, New Jersey 07974-2082 (US)
(72) Inventor: Shah, Chetan, Bridgewater, NJ 08807 (US)
(74) Representative: Wickham, Michael

(57) **Abstract**

The present invention provides for the use of oxygen-enriched gas stream injected into a sulfuric acid plant furnace to increase the proportion of carbon dioxide in the combustion products. The carbon dioxide is then recovered, purified and processed such that it can be employed in additional processes such as that in the food industry.

## Description

The present invention provides a process for enriching the oxygen content of a furnace in a sulfuric acid production plant. More particularly, the present invention provides for increasing the recovery of carbon dioxide from a sulfuric acid plant.

Sulfuric acid is typically made by two major processes, leaden chamber and contact. The leaden chamber process, which is typically used to produce the acid used to make fertilizers, produces a relatively dilute sulfuric acid of 62 to 78%. The contact process produces a purer, more concentrated acid but also requires the use of purer raw materials and catalysts. The lead process or leaden chamber process is the older of the two and is not in use much anymore. In the contact process, purified sulfur dioxide and air are mixed, heated to about 450°C and passed over a catalyst. The sulfur dioxide is oxidized by the catalyst to sulfur trioxide The sulfur trioxide is cooled and passed through two towers. In the first tower it is washed with fuming sulfuric acid and in the second tower it is washed with 97% sulfuric acid. 98% sulfuric acid is usually produced in this tower. The desired acid concentration may be produced by mixing or diluting the sulfuric acid made by this process.

In the catalytic oxidation stage, sulfur dioxide and oxygen in the process gas stream are converted to sulfur trioxide by a heterogeneous type reaction. This is a catalysed reaction and the catalyst is typically of vanadium or potassium sulfate catalyst supported on a diatomaceous earth carrier. However, other catalysts such as vanadium-type catalysts are also known in this process. After conversion of the sulfur dioxide to sulfur trioxide, the sulfur trioxide is reacted with water to form sulfuric acid in an SO₃ absorption zone wherein the absorption media is strong sulfuric acid solution. While reaction of SO₃ with the water portion of the concentrated sulfuric acid is rapid and virtually complete, SO₂ is removed from the gas phase to a lesser extent to form sulphurous acid in the concentrated sulfuric acid media.

Another of the byproducts from the sulfuric acid plant is carbon dioxide. Typically, though, this carbon dioxide is not recovered from the purged gas because of its low concentration in the purged gas. The present inventors have discovered that the use of higher concentrations of oxygen added to the sulfuric acid plant will produce a higher concentration of carbon dioxide in the purged gas while not exceeding the maximum temperature of the catalyst converting sulfur dioxide to sulfur trioxide in the sulfuric acid plant.

Carbon dioxide yield in the purged gas from a sulfuric acid production facility is increased by the addition of enriched oxygen to the sulfuric acid plant. This increase in oxygen content results not only in a higher carbon dioxide concentration in the stack gas leaving the plant but also will inhibit the increase in the maximum temperature at which the catalyst converts sulfur dioxide to sulfur trioxide. The CO₂ recovered from the purged gas can then be purified and passed through a carbon dioxide liquefaction plant which can yield food grade carbon dioxide.

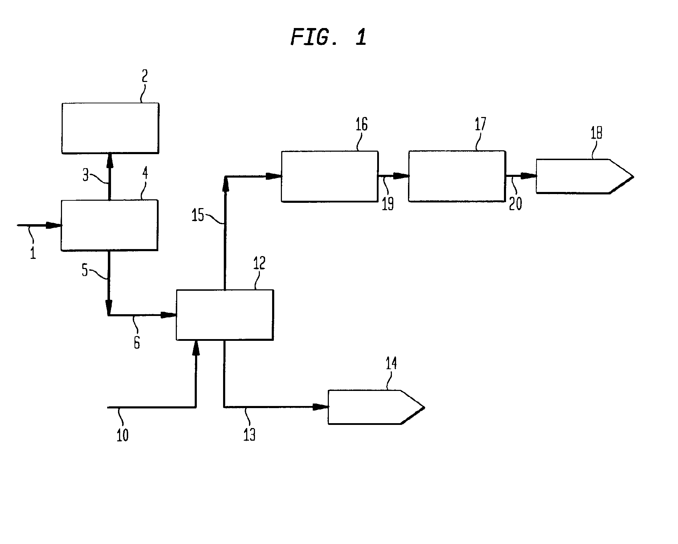

The process according to the invention will now be described by way of example with reference to the accompanying drawing which is a schematic representation of a sulfuric acid plant for performing the process of the present invention.

The present invention is directed to a process for increasing the recovery of carbon dioxide from a sulfuric acid plant furnace comprising injecting oxygen into the furnace. It has been discovered that by increasing the oxygen content over that of air, which is traditionally inputted into the sulfuric acid plant furnace, that nitrogen presence in the feed is reduced and higher carbon dioxide concentration in the stack gas will result. This process will also operate such that the catalyst temperature does not rise above that which would damage the catalyst and damage the conversion of the sulfur dioxide to sulfur trioxide. Typically, this temperature is less than 2100°F but can be greater than this if the reformer refractory is modified to withstand higher temperatures. The enriched oxygen stream which is injected into the sulfuric acid plant furnace will contain about at least 60% by volume oxygen. This oxygen stream can be obtained from any standard source such as oxygen obtained from pressure swing adsorption, temperature swing adsorption, vacuum swing adsorption or vacuum pressure swing adsorption.

These processes are preferably cyclic adsorption processes. Regeneration of the adsorbents used in the invention may also be affected by purging the beds with or without pressure and/or temperature change during the regeneration step relative to the adsorption step of the process. The temperature at which the adsorption step is carried out may vary over a wide range. For example, from a minimum temperature of about -50°C to a maximum of about 200°C. It is generally preferred, however, that the adsorption temperature be in the range of about 0 to about 80°C and most preferably in the range of about 5 to about 40°C.

The pressure at which the adsorption step can be carried out varies over a wide range. For pressure swing adsorption cycles, the adsorption step is generally carried out at a pressure in the range of about 0.8 to about 50 bara (bar absolute) and is preferably carried out at a pressure in the range of about 1 to 20 bara and for temperature swing adsorption cycles, the adsorption step is usually carried out at or above atmospheric pressure. When the adsorption process is PSA, the regeneration step is generally carried out at temperatures in the neighborhood of the temperature at which the adsorption step is carried out and at an absolute pressure lower than that of the adsorption pressure. The pressure during the regeneration step of PSA cycles is usually in the range of about 0.1 to above 5 bara and it is preferably in the range of about 0.2 to about 2 bara during regeneration. The regeneration phase may be a multi-step procedure which includes a depressurization step during which the vessels containing the adsorbent are vented until they obtain the desired lower pressure and an evacuation step during which the pressure in the vessels is reduced to sub-atmospheric pressure by means of a vacuum inducing device such as a vacuum pump.

When the adsorption process is TSA, bed regeneration is carried out at a temperature higher than the adsorption temperature and is usually carried out at temperatures in the range of about 50 to about 300°C and is preferably carried out at temperatures in the range of about 100 to 250°C. When a combination of PSA and TSA is used, the temperature and pressure in the bed regeneration step are higher and lower, respectively, than they are during the adsorption step. The adsorbents employed in the process in the present invention typically include zeolites, mesopore structure materials, carbon molecular sieves and other inorganic porous materials such as metal oxides and mixtures thereof.

The process of the instant invention would have applicability not only in facilities that directly manufacture sulfuric acid but also those facilities where sulfur components such as H₂S and SO₂ are removed from emissions and converted to a sulfuric acid product. Typical of these installations would be power plants and other facilities that burn coal.

Reference will now be made to the figure which should be construed not as limiting but exemplary of the present invention.

Syngas which comprises hydrogen, carbon monoxide and carbon dioxide is directed through line 1 from a gasifier (not shown) to an acid gas system 4 in which hydrogen sulfide impurity is removed from the syngas by means of a selective absorbent such as MDEA (methyldietholamine). Some of the carbon dioxide is co-absorbed with the hydrogen sulfide in the acid gas system 4. Regeneration of the absorbent creates an acid gas which contains mostly hydrogen sulfide and carbon dioxide. The acid gas exits the system 4 through line 5 and passes via line 6 to a sulfuric acid plant 12. Clean syngas meanwhile leaves the acid gas system 4 via line 3 and flows to, for example, a power generation system 2. This acid gas, which contains mostly H₂S and carbon dioxide, is sent to the sulfuric acid plant 12 to be burned in a furnace forming part of the plant. The H₂S is thus converted to SO₂. This SO₂ is further reacted with oxygen to SO₃ in subsequent reactors (not shown) in the sulfuric acid plant 12 and leaves the inert components particularly nitrogen and carbon dioxide unreacted.

Oxygen-enriched gas is provided via line 10 and can be derived from any oxygen source (not shown). Concentrated sulfuric acid exits the plant 12 through pipeline 13. The concentrated sulfuric acid is sent through pipeline 13 to a vessel 14 which can be a holding tank or other container for the sulfuric acid prior to further processing. Raw carbon dioxide which has a purity of approximately 80% by volume. CO₂ leaves the sulfuric acid plant 12 and enters a CO₂ purification unit 16. The CO₂ purification unit 16 is typically a soda scrubber which removes the sulfur dioxide present in the stack gas stream. The CO₂ that remains is compressed using any standard screw compressor and is directed through line 19 to a liquid carbon dioxide plant 17. The liquid CO₂ will be further purified within the liquid CO₂ plant 17 and is lastly passed through line 20 to a storage facility 18. The concentration of the oxygen in the oxygen-enriched stream can be anywhere above that which is typically found in atmospheric air. However preferably, the amount of oxygen is greater than 50 volume % and most preferably greater than 65 volume %. This amount of oxygen-enriched gas will achieve greater than 80 volume % carbon dioxide in the stack gas which would allow straight carbon dioxide cryogenic purification.

## Claims

1. A process for recovering carbon dioxide from a sulfuric acid plant furnace comprising injecting an oxygen-enriched gas stream into said furnace to support combustion therein and taking carbon dioxide containing exhaust gas from the sulfuric acid plant for recovery of carbon dioxide.

2. A process as claimed in claim 1, wherein the feed to said furnace comprises hydrogen sulfide and carbon dioxide.

3. A process as claimed in claim 2, wherein said carbon dioxide constitutes at least 85 mole % of said feed.

4. A process as claimed in any one of the preceding claims, wherein the temperature of the said furnace is less than 2100°F.

5. A process as claimed in any one of the preceding claims, wherein the oxygen content of said oxygen-enriched gas stream is greater than 50 volume %.

6. A process as claimed in any one of the preceding claims, wherein said recovered carbon dioxide is food grade carbon dioxide.

7. A process as claimed in any one of the preceding claims, wherein said furnace and sulfuric acid plant are associated with a power plant or other coal burning facility.

8. A process as claimed in any one of the preceding claims, wherein a catalyst for converting sulfur oxides to higher order of sulfur oxides is present in said sulfuric acid plant.

9. A process as claimed in claim 9 wherein the temperature at which said catalyst is deactivated is not exceeded.

10. A process as claimed in any one of the preceding claims, in which the recovery of the carbon dioxide includes the step of liquefying it.
